(19) Europäisches Patentamt
European Patent Office
Office européen des brevets

(11) **EP 3 696 582 A1**

(12) **EUROPEAN PATENT APPLICATION**

(43) Date of publication:
**19.08.2020 Bulletin 2020/34**

(51) Int Cl.:
**G02B 5/30** (2006.01)  **G02B 27/01** (2006.01)
**G02F 1/1335** (2006.01)

(21) Application number: **20155815.2**

(22) Date of filing: **06.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.02.2019 US 201916271107**

(71) Applicant: **Visteon Global Technologies, Inc.
Van Buren Township, MI 48111 (US)**

(72) Inventors:
• **WEINDORF, Paul Fredrick Luther
Van Buren Township, MI 48111 (US)**
• **AUGER, Elijah Louis
Van Buren Township, MI 48111 (US)**

(74) Representative: **MERH-IP Matias Erny Reichl
Hoffmann
Patentanwälte PartG mbB
Paul-Heyse-Strasse 29
80336 München (DE)**

(54) **POLARISING LENS ASSEMBLY FOR INCREASING CONTRAST RATIO OF REFLECTED LIGHT**

(57) A system displays information to a user and includes a display device, a polarizer lens assembly, and a microcontroller. The display device projects the information as p-polarized light. The polarizer lens assembly is oriented at an angle with respect to the display device, and includes an active polarizer lens and a reflective polarizer lens. The active polarizer lens has an OFF/unpolarized and one or more ON/polarized states. The polarizer lens assembly has a substantially transparent appearance in the OFF/polarized state(s) and a substantially opaque appearance in the ON/polarized state. The reflective polarizer lens is adjacent to the active polarizer lens between the display device and the active polarizer lens, and reflects the p-polarized light. The microcontroller, in response to an input signal, transmits a drive signal to the active polarizer lens to transition the active polarizer lens from the OFF/unpolarized state to the ON/polarized state.

Fig-2

**Description**

TECHNICAL FIELD

The present disclosure generally relates to systems and methods for increasing the contrast ratio of light-based information reflected onto an image plane, such as within an electronic instrument panel of a vehicle.

BACKGROUND

Instrument panels may include clusters of gauges, with each gauge presenting operationally relevant information to a system user. An instrument panel may be positioned within the user's field of view. The individual gauges are configured to convey particular pieces of information, such as a remaining fuel level, current speed and heading, and ambient, external, and/or component-level temperature, etc.

Early instrument panels employed gauge clusters that operated primarily as analog devices. In a motor vehicle context, for instance, analog speedometers and fuel gauges may have an indicator, such as a needle or a pointer, that is physically moved by a corresponding input between defined lower and upper range limits. In contrast to analog gauges, modern digital gauges may include transducers or other sensors which output electrical signals to a microprocessor. The electrical signals may be proportional to the measured value, e.g., a proportional voltage signal. In response to such signals, the microprocessor automatically adjusts a corresponding digital readout for display to the user, e.g., as a graphical icon, an image, and/or text.

SUMMARY

Systems and methods are disclosed herein for enhancing the visibility of light-based information that is reflected onto an image plane of an electronic instrument panel, e.g., as a digital gauge cluster and/or another information display. Enhancement may be attained by the resulting increase in contrast ratio, particularly when operating the instrument panel under relatively bright ambient lighting conditions. The system according to an embodiment includes a display device which projects the information, as p-polarized light, toward a polarizer lens assembly configured as described herein. In general, the polarizer lens assembly utilizes active polarizer technology, e.g., liquid crystal molecules suspended with a guest dye, such that the liquid crystals act as a host and the dye acts as the guest that couples itself to the host. The liquid crystal molecules selectively align in response to an applied drive voltage, to selectively transition the polarizer lens assembly from a transparent/semi-transparent appearance in an OFF/nonpolarized state to a substantially-opaque or black appearance in an ON/polarized state, as perceived by the above-noted user. A "user" as used herein refers to an operator of a system that includes the instrument panel, and may therefore variously include a driver of a motor vehicle, a pilot of an aircraft, an operator of a marine vessel or watercraft, an operator of a stationary or mobile piece of equipment, etc.

The transparent-to-opaque transition noted above may be selectively triggered under high luminance ambient lighting conditions, such as when the instrument panel is exposed to direct sunlight. Selective activation in this manner may help improve contrast ratios and enhance overall visibility of the displayed information.

In an embodiment, the polarizer lens assembly includes adjacent first and second layers/lenses. The first lens may be embodied as a liquid crystal material-based active polarizer lens. The second lens, which is situated closer to the user than is the first lens, is embodied as a reflective polarizer layer, e.g., a thin film, that may be bonded or otherwise securely attached to an outer surface of the first lens.

The first lens may be optionally segmented or sectioned, i.e., having one or more portions with a variable polarization and one or more portions whose polarization cannot be varied, or alternatively having independently-drivable portions. Such an embodiment may enable certain segments of the first lens to be transitioned to the ON/polarized state while other segments remain in the OFF/unpolarized state.

A microcontroller may be used as part of the system and an accompanying control strategy. The microcontroller may selectively control the ON/OFF polarized state of the active polarizer lens (first lens), e.g., in response to a sensor-detected ambient lighting level or, in other embodiments, via a user-selected activation request. The microcontroller is in communication with the optional sensor, the active polarizer lens, and the above-noted display device, the latter of which may be variously embodied a liquid crystal display (LCD), an organic light-emitting diode (OLED) display, or another suitable device configured to project information as p-polarized light toward and onto the polarizer lens assembly.

In response to an input signal indicative of a threshold low level of ambient light, and/or in response to a user's selection via a touch input or activation of a corresponding mechanical input device, the microcontroller transmits a drive signal to the active polarizer lens, e.g., as a proportional or differential voltage signal. The drive signal in turn adjusts light transmittance properties of the active polarizer lens as set forth in detail herein. Therefore, when the polarizer lens assembly is in an OFF/unpolarized state, the appearance of the polarizer lens assembly to the user is that of a transparent pane. However, when the polarizer lens assembly is transitioned to the ON state by the aforementioned drive signal, the polarizer lens assembly perceptibly darkens to form a dark background that is more conducive to display of the information.

The extent of the darkening effect may be calibrated such that, in a simplified embodiment, a single level of opacity is achieved by transitioning to the ON state. That is, the polarizer lens assembly is either transparent or it is substantially opaque/black. In another embodiment, the opacity level may be varied anywhere between partially opaque and black, e.g., in proportion to the detected ambient lighting level and/or the user's activation input. In either embodiment, the microcontroller is able to selectively darken the background of the displayed information. In this manner, the polarizer lens assembly improves visibility under high luminance ambient lighting conditions that would otherwise make it difficult for the user to easily discern the projected information.

In a particular embodiment, a system for displaying information to a user includes a display device configured to project the information as p-polarized light, a polarizer lens assembly having an active polarizer lens and a reflective polarizer lens, and a microcontroller. The active polarizer lens has an OFF/unpolarized state and an ON/polarized state. The polarizer lens assembly, which acts as an image plane, has a substantially transparent appearance when the active polarizer lens is in the OFF/unpolarized state and a substantially opaque appearance when the active polarizer lens in the ON/polarized state. The reflective polarizer lens is positioned adjacent to the active polarizer lens between the display device and the active polarizer lens, and is configured to reflect the p-polarized light. The microcontroller is configured to communicate with the active polarizer lens. In response to an input signal, the microcontroller transmits a drive signal to the active polarizer lens, e.g., as a proportional or differential voltage signal, which transitions the active polarizer lens from the OFF/unpolarized state to the ON/polarized state.

In another embodiment, a non-transitory computer-readable medium has computer-readable instructions stored therein for displaying information to a user of an instrument panel. The instrument panel has a display device and a polarizer lens assembly. Execution of the computer-readable instructions by a processor of a microcontroller causes the microcontroller to command the display device to project information onto the polarizer lens assembly as p-polarized light, with the polarizer lens assembly oriented at a predetermined angle with respect to the display device. The polarizer lens assembly also includes an active polarizer lens having an OFF/unpolarized state and an ON/polarized state, and a reflective polarizer lens positioned adjacent to the active polarizer lens between the display device and the active polarizer lens. The reflective polarizer lens reflects substantially all of the p-polarized light incident on the reflective polarizer lens, regardless of the ON/OFF state of the active polarizer lens.

Execution of the instructions causes the microcontroller to receive an input signal from an ambient light sensor and/or a user input device, and to transmit a drive signal to the active polarizer lens in response to the input signal. The drive signal transitions the active polarizer lens from the OFF/unpolarized state and a substantially transparent appearance to the ON/polarized state and a substantially opaque appearance.

A system according to another embodiment may be used aboard a vehicle having a steering input device and a dashboard. The system may include an instrument panel and the microprocessor, with the instrument panel positioned adjacent to the steering input device and dashboard. The instrument panel includes the above-noted display device and polarizer lens assembly. The display device in this embodiment projects digital information onto the polarizer lens assembly as p-polarized light, with the light possibly forming a digital gauge/gauge cluster of the instrument panel. The polarizer lens assembly, which is oriented at a predetermined angle with respect to the display device, includes an active polarizer lens having an OFF/unpolarized state and an ON/polarized state, and also includes a reflective polarizer lens.

The polarizer lens assembly has a substantially transparent appearance when the active polarizer lens is in the OFF/unpolarized state and a substantially opaque appearance when the active polarizer lens in the ON/polarized state. The reflective polarizer lens is positioned adjacent to the active polarizer lens between the display device and the active polarizer lens, and reflects substantially all of the p-polarized light falling incident on the reflective polarizer lens. A microcontroller communicates with the active polarizer lens. Responsive to an input signal, the microcontroller transmits a drive signal to the active polarizer lens to transition the active polarizer lens from the OFF/unpolarized state to the ON/polarized state.

The above features and advantages and other features and advantages of the present teachings are readily apparent from the following detailed description of the best modes for carrying out the teachings when taken in connection with the accompanying drawings.

BRIEF DESCRIPTION OF THE DRAWINGS

FIGS. 1A, 1B, and 1C are schematic perspective view illustrations of an instrument panel having a polarizer lens assembly constructed in accordance with one or more of the embodiments disclosed herein.

FIG. 2 is a schematic illustration of a system for enhancing the visibility of projected information, with the system including a display device, a polarizer lens assembly, and a microcontroller in a possible embodiment.

FIGS. 3A and 3B are plots of light transmission for unpolarized and polarized variations of an active polarizer lens as shown in FIG. 2, respectively, with differential voltage depicted on the horizontal axis and light transmittance percentage depicted on the vertical axis.

FIG. 4 is a graphical depiction of a first-order reflection model that may be used in a disclosed embodiment.

FIG. 5 is a plot of polarized light reflectivity for a material usable as part of the polarizer lens assembly, with wavelength depicted on the horizontal axis and reflection percentage depicted on the vertical axis.

FIG. 6 is a plot of polarized light transmission for an absorptive-type reference material and a reflective polarizer material that, in a possible embodiment, may be used as part of the polarizer lens assembly shown in FIG. 2, with the reference material shown for the purpose of comparison with wavelength depicted on the horizontal axis and light transmission percentage depicted on the vertical axis.

FIG. 7 is a flow chart showing an embodiment of a method for increasing the contrast ratio of information displayed on the polarizer lens assembly described herein.

The present disclosure may have various modifications and alternative forms, and some representative embodiments are shown by way of example in the drawings and will be described in detail herein. Novel aspects of this disclosure are not limited to the particular forms illustrated in the above-enumerated drawings. Rather, the disclosure is to cover modifications, equivalents, and combinations falling within the scope of the disclosure as encompassed by the appended claims.

DETAILED DESCRIPTION

Those having ordinary skill in the art will recognize that terms such as "above," "below," "front", "back", "upward," "downward," "top," "bottom," etc., may be used descriptively herein without representing limitations on the scope of the disclosure, as defined by the appended claims. Furthermore, the present teachings may be described in terms of functional and/or logical block components and/or various processing steps. Such block components may be comprised of various hardware, software, and/or firmware components configured to perform the specified functions.

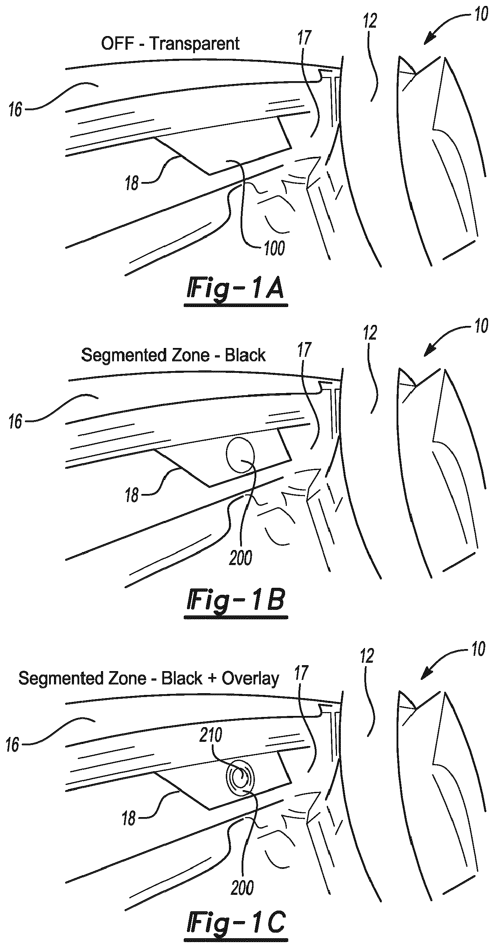

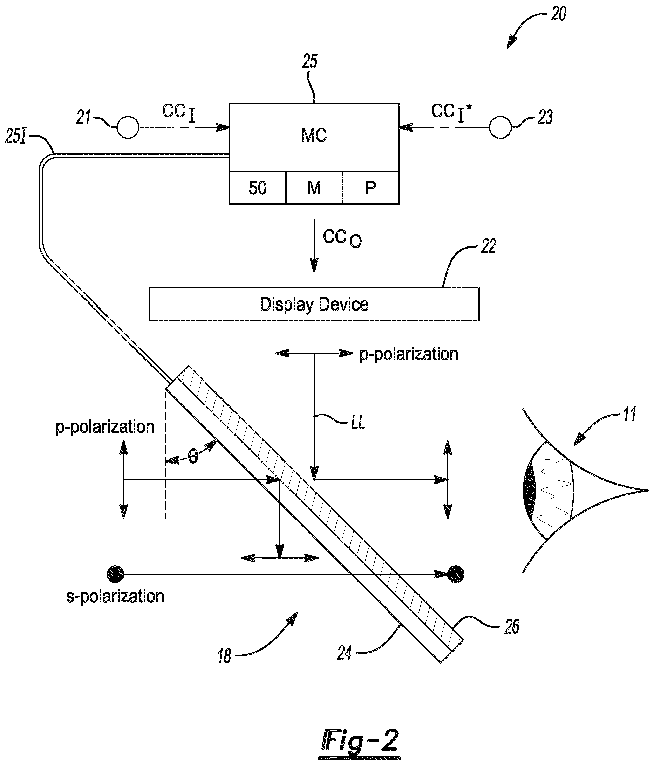

Referring to the drawings, wherein like numerals indicate like parts throughout the several views, an instrument panel 10 is shown schematically FIGS. 1A, 1B, and 1C. The instrument panel 10 may be used as part of a vehicle or other mobile or stationary system in certain embodiments, such as but not limited to a motor vehicle, an aircraft, or a marine vessel, any of which may include a steering input device 12 situated adjacent to a dashboard 16. A multi-layer polarizer lens assembly 18, which is shown in more detail in FIG. 2, selectively employs properties of reflective polarization in its operation, and thereby aids in the presentation of information to a user 11 (see FIG. 2), particularly under bright daylight or other high-luminance ambient lighting conditions that may otherwise adversely affect visibility of such information.

In general, propagating light waves generate an electric field. The electric field oscillates in a direction that is perpendicular/orthogonal to the light wave's direction of propagation. Light is unpolarized when the fluctuation of the electric field direction is random. Conversely, light may be described as polarized when fluctuation of the electric field is highly structured, with laser beams being a common example of highly-polarized light and sunlight or diffuse overhead incandescent lighting being examples of unpolarized light. The polarization properties of the polarizer lens assembly 18 described herein are selectively varied to extinguish s-polarized light incident from either the front or the rear side of the polarizer lens assembly 18, as shown in FIG. 2, to cause the polarizer lens assembly 18 to perceptibly darken from the perspective of the user 11. The darkened appearance in turn provides a more favorable background for projecting the polarized light as information to the user 11.

In the illustrated embodiment of FIGS. 1A-C, the steering input device 12 is shown as a steering wheel, with an instrument panel 17 mounted with respect to the dashboard 16. Such a configuration may be useful in a motor vehicle, for instance, or in an aircraft, boat, or other watercraft. In its OFF state of FIG. 1A, the polarizer lens assembly 18 may present a substantially transparent or transparent background 100 as in FIG. 1A, such that the user 11 of FIG. 2 sees through the polarizer lens assembly 18 as a transparent or smoky pane. In the ON state depicted in FIG. 1B, an opaque/black background 200 is generated. FIG. 1C shows the opaque/black background 200 with an information overlay 210, e.g., an icon, image, text, and/or other information. The background 200, via corresponding segmenting or sectioning of an underlying active polarizer lens 24 as described below, may be segmented or sectioned. That is, designated portions of the active polarizer lens 24 may be individually-addressable and/or otherwise selectively transitionable to the ON/polarized state forming the background for the overlay 210, while other designated portions of the active polarizer lens 24 remain in the OFF/polarized state and thus transparent.

As a point of reference, one may consider the effects of a fully-transparent pane of glass as a reflective surface in lieu of the disclosed polarizer lens assembly 18. Such glass would present a transparent "floating display" appearance. However, in order to obtain sufficient luminance of a virtual image or other displayed information, e.g., of greater than 400 candela per square meter (cd/m²), a display luminance of approximately 5,000 cd/m² would be required, assuming that front and rear surfaces of such a hypothetical transparent glass pane each reflect at a 4% (0.04) reflection rate, i.e.:

$$Display\ Luminance = \frac{400}{0.08} = 5,000\ cd/m^2.$$

As the angle of incidence of incident light on such a pane increases from 0 degrees, the amount of luminance quickly degrades, with the reflection rate for a p-polarized light component decreasing relative to an s-polarized light component.

The amount of required display luminance approximately doubles at an angle of incidence of 45 degrees relative to the obtainable luminance at 0 degrees. The corresponding display luminance may require significant thermal management countermeasures and associated costs. The present polarizer lens assembly 18 thus acts as a "smart" optical lens option by combining reflective and active polarizing technologies in a manner that reduces required display luminance and thereby produces a more optimal contrast ratio relative to the hypothetical transparent glass lens.

The system 20 for enhancing visibility of displayed information is shown in further schematic detail in FIG. 2. In a possible embodiment, the system 20 includes the display device 22, e.g., a liquid crystal display (LCD) or organic light emitting diode (OLED) screen via which information is initially presented and projected as p-polarized light (arrows LL). In the non-limiting embodiment of FIGS. 1A-C, for instance, the display device 22 is mounted below the dashboard 16 and thus hidden from direct view by the user 11, with the display device 22 projecting light downward toward and onto the polarizer lens assembly 18. Alternatively, the display device 22 may be housed within the dashboard 16 and configured to project light upward toward the polarizer lens assembly 18, e.g., toward a windshield (not shown), or the polarizer lens assembly 18 may be integrated into the windshield.

The system 20 in the illustrated configuration also includes the polarizer lens assembly 18 and a microcontroller (MC) 25. The microcontroller 25, shown schematically in FIG. 2, may be embodied as one or more computer devices configured to selectively control cross-polarization of the polarizer lens assembly 18 as set forth herein. The microcontroller 25 includes a processor (P) and tangible, non-transitory memory (M), e.g., read only memory in the form of optical, magnetic, and/or flash memory. The microcontroller 25 also includes application-suitable amounts of random-access memory and electrically-erasable programmable read only memory, a high-speed clock, analog-to-digital and digital-to-analog circuitry, and input/output circuitry and devices, as well as appropriate signal conditioning and buffer circuitry.

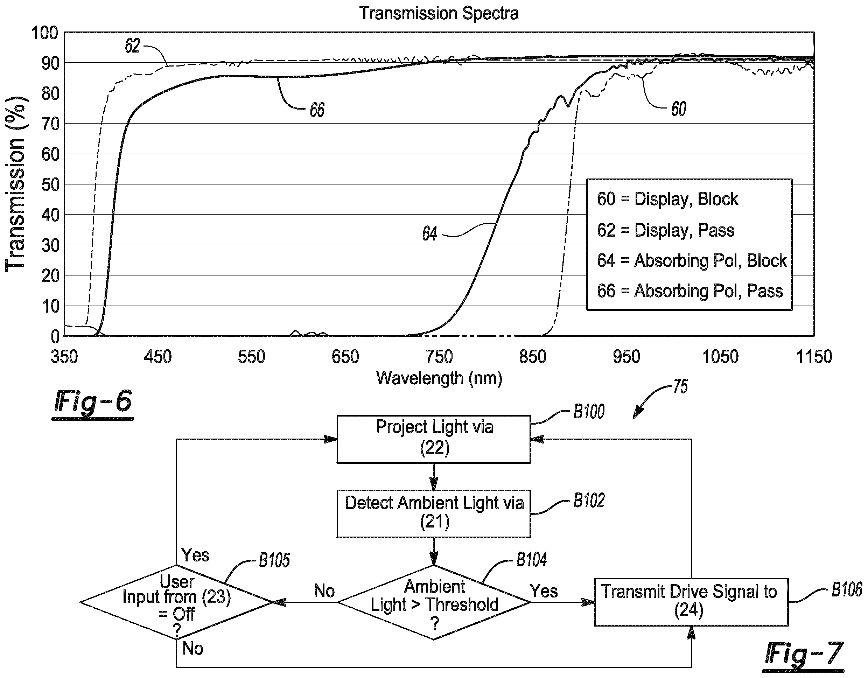

Execution of such logic by the processor (P) ultimately causes the microcontroller 25 to control the ON/OFF state of the polarizer lens assembly 18 using control signals (arrow CC_O) to achieve a desired lighting effect. A method 75 that may be used to control the polarization state is described below with reference to FIG. 7. A sensor 21 may be positioned with respect to the system 20 and used to measure an ambient lighting level, i.e., a brightness or luminance in proximity to the polarizer lens assembly 18, and to report the measured ambient lighting level as an input signal (arrow CC_I) to the microcontroller 25. In such an embodiment, the sensor 21 may be one or more photocells employing a photodiode or photoresistor.

In another embodiment, which may be used alone or in conjunction with the sensor 21, a user input device 23 such as a mechanical knob, a button, touch-screen device, etc., may be connected by wire or wirelessly to the microcontroller 25. The user input device 23 may be selectively activated in some embodiments by the user 11 to generate an activation request (arrow CC_I*) as another type of input signal, e.g., requesting an ON or OFF state of the polarizer lens assembly 18. For instance, the microcontroller 25 may be configured to transition the active polarizer lens 24 from the OFF/unpolarized state to the ON/polarized state responsive to the activation request (arrow CC_I*). Therefore, the selection by the microcontroller 25 of a particular appearance of the polarizer lens assembly 18 may be fully automatic based on the detected ambient lighting level, fully manual based on the request of the user 11, or a combination of these two options, e.g., with manual selection being available to the user 11 to selectively override the light level-based decision of the microcontroller 25.

Still referring to FIG. 2, the polarizer lens assembly 18 is configured to provide a reflective surface, oriented toward the user 11 as shown, onto which light-based information is projected from the display device 22. The polarizer lens assembly 18 is spaced a short distance apart from the display device 22, for instance about 5-10 cm apart in some configurations, and oriented at an angle ($\theta$) with respect to the display device 22. An optimum value of the angle ($\theta$) is based on various factors, including the reflection/transmittance properties of the particular materials used in constructing the polarizer lens assembly 18, expected ambient lighting levels, available brightness of light projected by the display device 22, etc. The angle ($\theta$) may fall in the range of about 30-60 degrees, generally, with an angle ($\theta$) of about 45 degrees shown in the non-limiting embodiment of FIG. 2.

The polarizer lens assembly 18 in its various embodiments includes an active polarizer lens (first lens) 24 and a reflective polarizer lens (second lens) 26. The active polarizer lens 24 may be embodied as a multi-layer structure of liquid crystal molecules sandwiched between adjacent panes of glass, plastic, or another sufficiently transparent material. The reflective polarizer lens 26 may include a reflective polarizer film bonded or otherwise attached an outer surface of the active polarizer lens 24. Two special classes of reflective polarizer materials that may be used in the construction of the reflective polarizer lens 26 commercially available as 3M™ Reflective Polarizer Mirror (RPM) and 3M™ Windshield Combiner Film (WCF), both available from THE 3M COMPANY, with headquarters located in Maplewood, MN. Other reflective polarizer materials having similar properties may be used to form the reflective polarizer lens 26 in other embodiments.

With regard to the properties of transmission and reflection, orthogonal linear polarization states of light are referred to in the art as p-polarization and s-polarization. The electric field of p-polarized light is polarized in a direction that is parallel to the plane of incidence of the incident light beams (arrow LL) from the display device 22 shown in FIG. 2. S-polarized light is perpendicular to such a plane of incidence, and thus p-polarized and s-polarized light are orthogonal to each other. Thus, cross-polarization results when the active polarizer layer 24 extinguishes the s-polarization component of incident light while the reflective polarizer lens 26 reflects the p-polarization component. In turn, this causes the polarizer lens assembly 18 to take on a darker appearance, since neither the s-polarization light component nor the p-polarization light component can shine through the polarizer lens assembly 18. The polarizer lens assembly 18 is configured to selectively extinguish s-polarized light while the reflective polarizer lens 26, oriented toward the display device 22, reflects incident p-polarized light from the display device 22 toward the user 11. The ultimate effect is that a small fraction of incident light, e.g., 13.5% or less in some embodiments, will pass through the polarizer lens assembly 18. The reflective polarizer lens 26 also reflects p-polarized light away from the back side of the polarized light assembly 18 due to the reciprocity nature of the reflective polarizer lens 26.

When transitioned to the non-activated/OFF state as shown in FIG. 1A, the active polarizer lens 24 transmits light and, as a result, appears as transparent to the user 11. Used in a vehicle, for instance, this state may be a default state when the vehicle is turned off and/or when the system 20 is operated under low ambient lighting conditions. When activated by the microcontroller 25, the active polarizer lens 24 blocks light that is incident parallel to the transmission axis of the reflective polarizer lens 26, thereby providing the appearance of an opaque/black background as best shown in FIG. 1B, onto which information from the display device 22 may be projected as shown in FIG. 1C.

The microcontroller 25 may be placed in communication with the polarizer lens assembly 18, and in particular with the active polarizer lens 24, via a communications interface 251 such as a hardwired connection and/or a flex circuit. In some embodiments, the microcontroller 25 may be used to simultaneously control operation of the display device 22, or a separate control device may be used for this purpose. The polarizer lens assembly 18 may be voltage-driven, e.g., via a polyphase drive waveform having a predetermined frequency and amplitude, with such a drive frequency generally being at least 60 Hz. A polyphase/AC waveform may be used to avoid charge migration in the liquid crystal molecule interior of the active polarizer lens 24, as will be appreciated by those of ordinary skill in the art.

In a simplified embodiment, the microcontroller 25 may command one of two different polarization rates, i.e., OFF/unpolarized or ON/polarized. The ON state corresponds to a substantially opaque or black appearance. Alternatively, the microcontroller 25 can select an opacity level from a range that varies from partially opaque to substantially or fully opaque. In an embodiment, the term "partially opaque" may refer to light transmittance rates of about 60-70% or more, while "substantially opaque" may correspond light transmittance rates of less than about 30-40%. Likewise, "black" may refer to a light transmittance rate of about 10-20% or less. These or other values may be established by controlling the magnitude of the drive voltage.

The various embodiments may be informed using the sensor 21 of FIG. 2, with the microcontroller 25 selecting the ON/OFF state and the opacity level based on the level of the detected light. In other words, the microcontroller 25 may determine in certain lighting conditions that the OFF state will result in sufficient reflectance of the information from the display device 22. Conversely, the microcontroller 25 may transition to the ON state under brighter/daylight lighting conditions. A lookup table may be optionally populated with different drive voltages and corresponding light ranges, for instance, with the microcontroller 25 selecting and applying a particular drive voltage that corresponds to the detect light level. These and other possible implementations may be envisioned in view of the present disclosure.

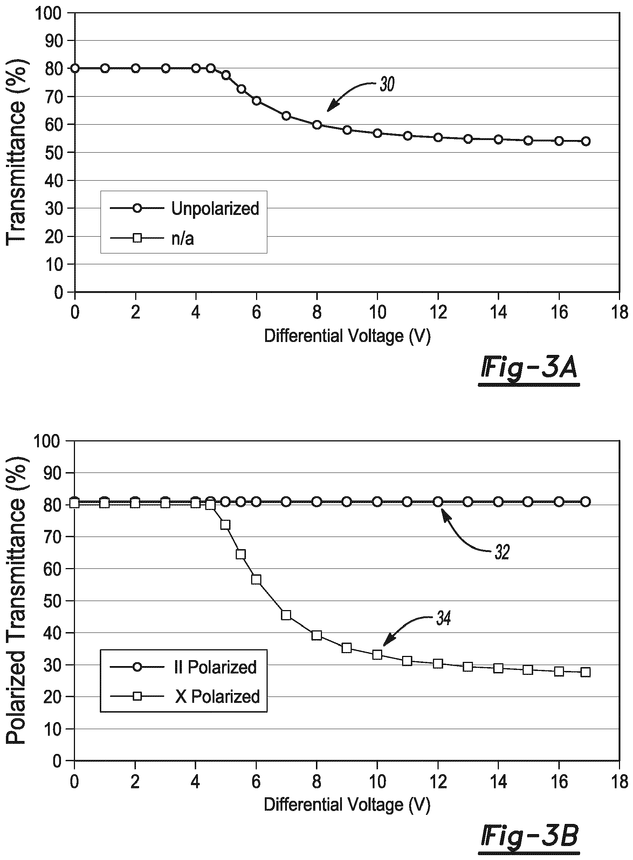

As shown in trace 30 of FIG. 3A, unpolarized light transmission of the active polarizer lens 24 may range from about 80% down to about 54% as a function of drive voltage, shown as a differential voltage across opposing surfaces of the active polarizer lens 24. However, this may be contrasted with FIG. 3B, which shows via trace 32 that p-polarized light transmission does not change as a function of the drive voltage, but rather remains constant at about 80%. On the other hand, the transmission rate (trace 34) of cross-polarized (s-polarized) light changes from about 80% down to about 28% as a function of the drive voltage. This enables cross-polarization properties to be leveraged to achieve the visual enhancements described herein.

More accurate light transmission rate estimates for the active polarizer lens 24 can be obtained by considering glass-to-air reflection rates in the analysis. Due to an index of refraction interface mismatch, the following Fresnel equation [1] may be used to estimate a reflection rate (R) at each glass-to-air interface. Using 1 and 1.52 as the indexes of refraction ($\eta$) for air and glass, respectively:

$$R = \left(\frac{\eta_1 - \eta_2}{\eta_1 + \eta_2}\right)^2 = \left(\frac{1 - 1.52}{1 + 1.52}\right)^2 = 4.3\% \qquad [1]$$

i.e., about 4%.

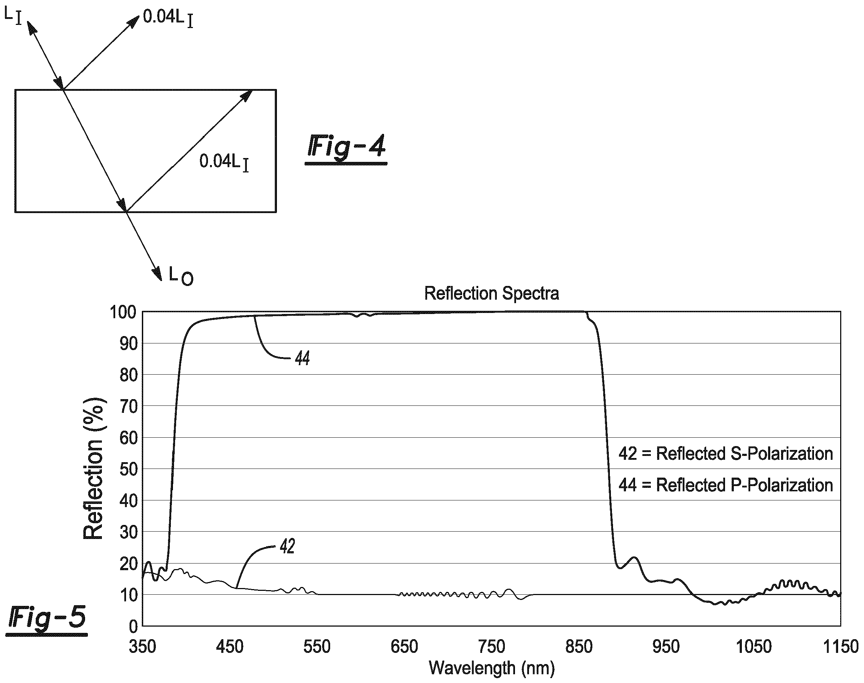

Using a first-order reflection model as shown in FIG. 4, output luminance ($L_O$) may be calculated by multiplying the input luminance ($L_I$) by the factors shown below in equation [2], where T is the transmission of the active polarizer lens 24:

$$L_O = L_I(1 - 0.04) \times T \times (1 - 0.4) \qquad [2]$$

where the measured transmission, $T_M$, is the quotient of $L_O/L_I$, and therefore equation [2] for determining output luminance ($L_O$) may be manipulated to yield the following equation [3]:

$$T = \left(\frac{L_O}{L_I}\right)\left(\frac{1}{0.96^2}\right) = \frac{T_M}{0.96^2} \qquad [3].$$

An important observation associated with active polarizer technology is that parallel-polarized transmission, $T_\parallel$, does not change as a function of drive level, wheras the cross-polarization transmission, $T_X$, changes dramatically as a function of drive level. At the drive extremes, cross-polarization transmissions may be defined as set forth in equations [4] and [5] below, where $T_{X\_OFF}$ is the cross-polarization transmission with zero drive, and $T_{X\_ON}$ is the cross-polarization transmission with maximum drive. Also, $T_{X\_OFF} = T_\parallel$ = constant, because no preferential polarization axis is present when dye molecules suspended within the liquid crystal material of the active polarizer lens 24 are vertically aligned. Therefore, equation [3] noted above may be used to determine the effective active polarizer transmission rates as follows:

$$T_{X\_OFF} = \frac{0.8}{0.96^2} = 0.868 \qquad [4]$$

$$T_{X\_ON} = \frac{0.28}{0.96^2} = 0.304 \qquad [5].$$

Thus, in a possible implementation, the active polarizer lens 24 may transmit about 80% of p-polarized light in its OFF/non-polarized state. However, when voltage is applied to the active polarizer lens 24, the transmission of s-polarized light drops from 80% in the OFF state to less than 30.4% in the ON/polarized state. For certain materials, therefore, particularly those having higher dye concentrations, the ON/polarized state of the active polarizer lens 24 may realize transmission rates that are much lower than 30%, e.g., as low as about 10-15%, but at the expense of the OFF transmission, which would also drop accordingly.

FIG. 5 shows an embodiment of reflection spectra for the reflective polarizer layer 26, e.g., constructed of materials similar to the above-noted RPM or other sufficiently reflective material that is optically flat with little reflected image distortion. As RPM is just one type of reflective material usable in the construction of the reflective polarizer layer 26, the indicated reflection spectra of FIG. 5 is non-limiting and intended as instructive of the present teachings. In the illustrated embodiment, the reflective polarizer layer 26 has a p-polarized light reflection rate (trace 44/reflected p-polarization) of approximately 99%, and an s-polarized light reflection rate (trace 42/reflected s-polarization) of about 11%. Since incident light (arrows LL of FIG. 2) from the display device 22 is p-polarized, as noted above, approximately 100% of such incident light will be reflected. This greatly reduces the amount of display luminance that is needed to obtain luminance of 400 cd/m² in a reflected virtual image or other projected information.

With respect to FIG. 6, transmission spectra are provided for a particular type of reflective polarizer material, in this instance the above-noted RPM, in comparison to non-reflecting materials, i.e., absorbing materials. Traces 60, 62, 64, and 66 represent transmission percentages at corresponding wavelengths of light. Traces 60 and 62 represent p-polarized light from the display device 22 that is blocked (i.e., reflected) and transmitted, respectively. More specifically, trace 62 represents the amount of polarized light that is transmitted when the polarized electric field axis is aligned to the transmission axis of the reflective polarizer lens 26 of FIG. 2. When the same polarized light is rotated 90 degrees to the transmission axis of the reflective polarize lens 26 material, the amount of light that is transmitted, represented by trace 60, is nearly 0% up to about 850nm.

Traces 64 and 66 represent capabilities of conventional absorbing/non-reflecting or dichroic materials by way of comparison, with trace 66 representing polarized light that is aligned with the transmission axis and trace 64 representing the amount of transmitted polarized light when the polarized light is rotated 90 degrees from the transmission axis of the absorbing polarizer material. As will be appreciated, certain crystalline materials absorb more light in one incident plane relative to another incident plane, such that light transmitted through the absorbing material is progressively polarized. The present approach thus may be characterized by the use of the reflective polarizer lens 26 in lieu of such absorbing materials.

Using a 90% transmissive rate for s-polarized light through the reflective polarizer lens 26, if the active polarizer lens 24 is fully-driven, the amount of light transmission from the back side of the active polarizer lens 24 may be estimated at 13.5%, i.e., the polarizer lens assembly 18 will appear dark to the user 11. The following equation [6] does not consider the p-polarized light component because, in FIG. 6, 0% of the p-polarized light is transmitted:

$$T_{DrivenAP} = L_S \times T_S \times AP_{S\_Driven} \qquad [6]$$

$$T_{Driven\_AP} = 50\% \times 90\% \times 30.4\% = 13.5\%$$

where $T_{Driven\_AP}$ is the transmission rate of s-polarized light when the active polarizer ("AP") lens 24 in the driven state, $L_S$ is the percentage of light in the s-polarized orientation, $T_S$ is the transmission rate of s-polarized light, and $AP_{S\_Driven}$ is the transmission rate of s-polarized light when the active polarizer lens 24 is in the driven state.

When the display device 22 of FIG. 2 is off and the active polarizer lens 24 is OFF/unpolarized, the active polarizer lens 24 will transmit substantially all of, e.g., about 87% of, incident p-polarized and s-polarized light components. For the representative material whose performance is depicted in FIG. 6, 50% of the light is not transmitted, while the remaining 50% is transmitted at a 90% transmission rate. Therefore, the total transmission of the active polarizer lens 24 will be about 39%, i.e.:

$$T_{Undriven\_AP} = L_S \times T_S \times AP_{S\_Undriven} \qquad [7]$$

$$T_{Undriven\_AP} = 50\% \times 90\% \times 87\% = 39\%$$

where $T_{Undriven\_AP}$ is the transmission rate of the active polarizer lens 24 in the undriven state and $AP_{S\_Undriven}$ is the transmission rate of the s-polarized light when the active polarizer lens 24 is in the undriven state.

Furthermore, since the reflective polarizer lens 26 is reflecting essentially 100% of incident p-polarized light from its back side in a non-transmissive orientation, 38% of the light, per equation [8] below, will be recycled and reflected toward the dashboard 16 of FIGS. 1A-C, thus mitigating some of the effects of the 39% transmission rate. As shown in FIG. 3B, the p-polarized light reflection rate does not change as the active polarizer lens 24 is actively driven, and therefore the amount of reflected light will remain constant at 38%. That is:

$$R_{Backside} = L_P \times R_P \times AP_P^2 \qquad [8]$$

$$R_{Backside} = 50\% \times 100\% \times 87\% \times 87\% = 38\%$$

where $R_{Backside}$ is the reflection rate of the active polarizer lens 24, $L_P$ is the percentage of light in the p-polarized orientation, $R_P$ is the reflection rate of the material for p-polarized light, and $AP_P$ is the active polarizer transmission rate for p-polarized light. The parameter $AP_P$ is squared in equation [8], since the reflected p-polarized light must pass twice through the active polarizer lens 24. A beneficial aspect of the active polarizer lens 24 is that it can be segmented if desired, thereby allowing activation of predefined "zones". Therefore, designated zones of the active polarizer lens 24 could be activated to become opaque, thereby creating an application-tailored appearance. For example, if a small icon is to be displayed, a corresponding portion of the surface area of the active polarizer lens 24 may be transitioned to the ON state and thus rendered substantially opaque, with the remainder of the active polarizer lens 24 remaining in the OFF state, and thus largely transparent.

Another variation of the active polarizer configuration is to utilize "weaker" reflective polarizer material, e.g., the WCF material noted above or another material having a reflectivity of about 30% to p-polarized light at a 55° angle of incidence. The weaker material should transmit about 44% of p-polarized light when the active polarizer lens 24 is in the ON/driven state. In the OFF/non-driven state, a transmission rate of about 70% may be desirable, and therefore WCF and other weaker materials may appear to the user 11 as clearer relative to using stronger materials such as the aforementioned RPM. Therefore, actual materials of construction may be selected to provide the desired appearance.

Passive solutions are also possible to implement that forego use of the active polarizer lens 24 altogether. For instance, a variation in the construction of the polarizer lens assembly 18 may include the reflective polarizer lens 26 constructed of material that reflects about 99% of the incident p-polarized light from the display device 22. Back side reflectance may be increased to 50%, since substantially all of the p-polarized light is reflected. Light is recycled to mitigate some of the loss in transparency. In a solution using the above-noted weaker materials, e.g., WCF, a light reflectance rate of about 30% remains. However, the transmission rate ($T_{WK}$) of the weaker materials changes to about 80%, i.e.,

$$T_{WK} = L_P \, x \, T_P \, x \, T_S \qquad\qquad [9]$$

$$T_{WK} = 50\% \text{ x } 70\% \text{ x } 90\% = 80\%$$

A comparison of the above-noted relatively strong (e.g., RPM) and relatively weak (e.g., WCF) example materials with the active polarizer (AP) lens 24 is summarized in the following table:

| Parameter | Glass | AP + Strong | AP + Weak | Strong | Weak |
|---|---|---|---|---|---|
| Display Reflection Rate | 4% | 99% | 30% | 99% | 30% |
| Lens Transmission (Off→On for AP) | 88% | 39%→13.5% | 70%→44% | 45% | 80% |

Thus, the use of weaker materials for the reflective polarizer lens 26 of FIG. 2 in combination the above-disclosed active polarizer lens 24 may provide a beneficial compromise, enabling reasonable transparency that can be selectively darkened as needed to improve the contrast ratio.

As shown in FIG. 7, the disclosed system 20 and the various teachings set forth above may be used as part of a method 75 for displaying information to the user 11, as will be readily appreciated by one of ordinary skill in the art in view of the foregoing disclosure. Such a method 75 may include, at block B100, projecting the information onto the polarizer lens assembly 18 of FIG. 2 as p-polarized light using the display device 22.

At block B102, the method 75 may include detecting ambient light via the sensor 21 of FIG. 2, and then transmitting the input signal ($CC_I$) to the microcontroller 25. The input signal ($CC_I$) in this instance is indicative of the ambient lighting level. The method 75 then proceeds to block B104.

Block B104 may entail comparing the measured ambient light level from block B102 to one or more calibrated lighting thresholds. The method 75 proceeds to block B105 if the detected ambient light level from block B102 is less than the threshold(s) from block B104, and to block B106 in the alternative when the ambient light level exceeds one or more of the threshold(s).

Block B105 of method 75 may include receiving the activation request ($CC_I$*) as another input signal from the user input device 23 of FIG. 2, via the microcontroller 25, and then determining whether the activation request ($CC_I$*) is indicative of a desire of the user 11 to leave the polarizer lens assembly 18 in an OFF state. Such a result may correspond to a manual override of the above-noted light-based activation. The method 75 returns to block B100 when such an override is detected.

At block B106, the microcontroller 25 transmits a drive signal to the active polarizer lens 24 of FIG. 2 for transitioning the active polarizer lens 24 from the OFF/unpolarized state and a substantially transparent appearance to the ON/polarized state and a substantially opaque/black appearance. The ON/polarized state may include a plurality of ON/polarized states, each corresponding to a particular band of ambient lighting, with each ON/polarized state corresponding to a respective one of the ambient lighting level bands.

As will be appreciated by those of ordinary skill in the art, the above method 75 or variations thereof may be implemented as a non-transitory computer-readable medium, e.g., the memory (M) shown in FIG. 2 or a separate medium such as a memory chip, with computer-readable instructions stored therein for displaying information to the user 11 of the instrument panel. The instructions, when executed by the processor (P) of the microcontroller 25, causes the microcontroller 25 to perform the above-noted process steps, e.g., to command the display device 22 to project information onto the polarizer lens assembly 18 as p-polarized light, receive the input signal ($CC_I$) and/or activation signal $CC_I*$ from the ambient light sensor(s) 21 and/or the user input device 23, and transmit a drive signal to the active polarizer lens 24 in response to the input signal/user activation request ($CC_I$, $CC_I*$) to transition the active polarizer lens 24 from the OFF/unpolarized state and a substantially transparent appearance to the ON/polarized state and a substantially opaque appearance. The various other logic blocks of FIG. 7 may be similarly implemented.

The foregoing detailed description and the drawings are supportive and descriptive of the disclosure, but the scope of the disclosure is defined solely by the claims. As will be appreciated by those of ordinary skill in the art, various alternative designs and embodiments may exist for practicing the disclosure defined in the appended claims.

**Claims**

1. A system for increasing a contrast ratio of information displayed to a user, comprising:

   a display device configured to project the information as p-polarized light;
   a polarizer lens assembly oriented at a predetermined angle with respect to the display device, the polarizer lens assembly including:

      an active polarizer lens having an OFF/unpolarized state and an ON/polarized state, wherein the polarizer lens assembly has a substantially transparent appearance when the active polarizer lens is in the OFF/unpolarized state and a substantially opaque appearance when the active polarizer lens is in the ON/polarized state;
      a reflective polarizer lens positioned adjacent to the active polarizer lens between the display device and the active polarizer lens, and configured to reflect substantially all of the p-polarized light falling incident on the reflective polarizer lens; and

   a microcontroller in communication with the active polarizer lens, wherein the microcontroller is configured, responsive to an input signal, to transmit a drive signal to the active polarizer lens, wherein the drive signal transitions the active polarizer lens from the OFF/unpolarized state to the ON/polarized state for increasing the contrast ratio.

2. The system of claim 1, further comprising:
   a sensor connected to the microcontroller that is configured to measure an ambient lighting level, and to communicate the ambient lighting level to the microcontroller as the input signal, wherein the input signal is indicative of the ambient lighting level as measured by the sensor.

3. The system of claim 2, wherein the ON/polarized state includes a plurality of ON/polarized states, and wherein the microcontroller is configured to transition the active polarizer lens from the OFF/unpolarized state to one of the plurality of ON/polarized states based on the ambient lighting level measured by the sensor.

4. The system according to any one of the preceding claims , further comprising a user input device connected to the microcontroller and configured to receive an activation request as part of the input signal, and to communicate the activation request to the microcontroller as the input signal, wherein the input signal is a desired ON or OFF state of the active polarizer lens.

5. The system according to any one of the preceding claims , wherein the reflective polarizer lens reflects at least about 99% of the p-polarized light and less than about 11% of the s-polarized light independently of the OFF/unpolarized state and ON/polarized state of the active polarizer lens.

6. The system according to any one of the preceding claims , wherein the drive signal is a proportional voltage signal or a differential voltage signal.

7. The system according to any one of the preceding claims , wherein the active polarizer lens is constructed from liquid crystal molecules suspended with a guest dye.

8. The system according to any one of the preceding claims , wherein the active polarizer lens is segmented or sectioned such that some designated segments or sections of the active polarizer lens are selectively transitioned to the ON/polarized state while other designated segments or sections of the active polarizer lens remain in the OFF/polarized state.

9. An instrument panel suited for being positioned adjacent to a steering input device and a dashboard in a vehicle, and including the system of any one of the preceding claims, wherein the digital information is projected as p-polarized light as a gauge or gauge cluster of the instrument panel.

10. The system according to any one of the preceding claims, wherein the microcontroller is configured to communicate with the display device, and control projection of the digital information onto the polarizer lens assembly.

11. The system according to any one of the preceding claims, further comprising: a sensor connected to the microcontroller and configured to measure ambient lighting levels, wherein the microcontroller is configured to transition the active polarizer lens from the OFF/unpolarized state to the ON/polarized state based on the ambient lighting levels.

12. A vehicle comprising the system of any one of claims 1 through 8.

OFF - Transparent

_Fig-1A_

Segmented Zone - Black

_Fig-1B_

Segmented Zone - Black + Overlay

_Fig-1C_

*Fig-2*

*Fig-3A*

*Fig-3B*

$L_I$

$0.04L_I$

$0.04L_I$

_Fig-4_

$L_O$

Reflection Spectra

_Fig-5_

Reflection (%)

100
90
80
70
60
50
40
30
20
10
0

44

42 = Reflected S-Polarization

44 = Reflected P-Polarization

42

350   450   550   650   750   850   950   1050   1150

Wavelength (nm)

Transmission Spectra

*Fig-6*

*Fig-7*

EP 3 696 582 A1

Europäisches
Patentamt

European
Patent Office

Office européen
des brevets

# EUROPEAN SEARCH REPORT

Application Number

EP 20 15 5815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 429 757 B1 (PEERI JONATHAN [US]) 30 August 2016 (2016-08-30) | 1-6,9-12 | INV. G02B5/30 G02B27/01 G02F1/1335 |
| Y | * column 3 - column 8; figures 1-3 * | 7,8 | |
| Y | US 2014/340728 A1 (TAHERI BAHMAN [US]) 20 November 2014 (2014-11-20) * paragraph [0063] - paragraph [0088] * | 7,8 | |

TECHNICAL FIELDS
SEARCHED       (IPC)

G02B
G02F

The present search report has been drawn up for all claims

| Place of search | Date of completion of the search | Examiner |
|---|---|---|
| Munich | 8 July 2020 | Denner, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 20 15 5815

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2020

| Patent document cited in search report | | Publication date | Patent family member(s) | | Publication date |
|---|---|---|---|---|---|
| US 9429757 | B1 | 30-08-2016 | NONE | | |
| US 2014340728 | A1 | 20-11-2014 | EP | 2810108 A1 | 10-12-2014 |
| | | | HK | 1201331 A1 | 28-08-2015 |
| | | | JP | 6694861 B2 | 20-05-2020 |
| | | | JP | 2015511329 A | 16-04-2015 |
| | | | JP | 2018032042 A | 01-03-2018 |
| | | | JP | 2019109528 A | 04-07-2019 |
| | | | US | 2014340728 A1 | 20-11-2014 |
| | | | WO | 2013116460 A1 | 08-08-2013 |

EPO FORM P0459

For more details about this annex : see Official Journal of the European Patent Office, No. 12/82